# EUROPEAN PATENT APPLICATION

(11) **EP 1 280 366 A1**
(43) Date of publication of application: **29.01.2003**
(21) Application number: 01118322.5
(22) Date of filing: 27.07.2001
(51) Int. Cl.: H04Q 7/22, G09F 19/00, G09F 27/00, H04N 7/088

(54) **Remote control of the screen display by sending data messages over a radiotelephony network**

(71) Applicant: Tatamia Solutions S.L., 08190 Sant Cugat del Valles (Barcelona) (ES)
(72) Inventor: Alonso Estalayo, Jesus, 08190 Sant Cugat del Valles, Barcelona (ES); Daviu Domingo, Eusebio, 25130 Algerri, Lleida (ES); Checa Yera, Rodrigo, 08290 Cerdanyola del Valles, Barcelona (ES); Yanguas Balmaseda, Jose, 28230 Las Rozas, Madrid (ES)
(74) Representative: Bloch, Gérard

(57) **Abstract**

The invention relates to the world of multimedia interactive systems and it stems from situations which, in essence, may be described as follows.

By multimedia system, it should be understood a system of which the output signals are at least audio and/or video signals.

If one wishes to organize a poll amongst a large audience gathered in one place, it is difficult to prevent the voicing of votes from turning into a cacophony, especially when dealing with an audience of young people and when the poll relates to a greater or lesser extent to the show business.

In the multimedia interactive process of the invention,
- subscribers (2) to at least one radiotelephony network (20)
- acquire instructions,
- which have been made to appear on at least one instruction and display screen (1;31) within direct sight of the subscribers (2),
- execute these instructions
- by sending, over the ratio network (20), data messages,
- which are caused to be processed in the processing center (4) of the system so as,
- through a computer network (10),
- to remotely control the displaying on the screen (1;31) of the processed data of the messages.

## Description

The invention relates to the world of multimedia interactive systems and it stems from situations which, in essence, may be described as follows.

By multimedia system, it should be understood a system of which the output signals are at least audio and/or video signals.

An artist performs on a stage in front of a crowd of admirers, all of whom voice their admiration for him by shouting and screaming at him, these shouts and screams coming from the heart but disrupting his show.

The invention proposes a solution to such a thirst for expression which does not exhibit the drawback recalled hereinabove.

If one wishes to organize a poll amongst a large audience gathered in one place, it is difficult to prevent the voicing of votes from turning into a cacophony, especially when dealing with an audience of young people and when the poll relates to a greater or lesser extent to the show business.

Another example may be that of chat shows whose implementation between mutually distant individuals is not necessarily obviously apparent.

The applicant now offers a solution for resolving these difficulties and therefore proposes his invention.

The invention relates firstly to a multimedia interactive process wherein
- subscribers to at least one radiotelephony network
- acquire instructions,
- which have been made to appear on at least one instruction and display screen within direct sight of the subscribers,
- execute these instructions
- by sending, over the radio network, data messages,
- which are caused to be processed so as,
- through a computer network,
- to remotely control the displaying on the screen of the processed data of the messages.

Preferably, the subscribers execute the instructions by sending short messages.

Advantageously, before the displaying on the screen of the processed data of the messages, their presentation is controlled.

In an actual implementation of the process of the invention, the displaying on the screen is performed after determining its location and the IP address of its control computer.

In another actual implementation of the process of the invention, the subscribers are all within direct sight of the same instruction and display screen and the instructions are made to appear and the processed data of the messages are displayed on this same, single screen.

In another implementation of the process of the invention, the instructions acquired by the subscribers have been made to appear, through at least the broadcast center of a TV channel, on the screens of their respective TV monitors being instruction and display screens.

The invention also relates to a multimedia interactive system, comprising a processing centre, linked to at least one radiotelephony network and to a computer network, which is arranged so as to receive data messages from subscribers to the radio network and to process the data, at least one instruction and display screen associated with a display controlling computer linked to the computer network and controlled by the processing centre.

In an interesting embodiment of the system, the display controlling computer is associated with a broadcast center of a TV channel associated with a series of subscriber's TV monitors of which the screens are instruction and display screens.

The invention also relates to a processing centre for achieving the multimedia interactive system of the invention, arranged so as
i) to be linked to a cellular radiotelephony network and to a computer network,
ii) to process message data from subscribers of the radiotelephony network and
iii) to control computers for controlling instruction and display screens for interaction with the said subscribers.

The invention will be better understood with the aid of the following description of the system and of the multimedia interactive process, with reference to the appended drawing, in which
- Figure 1 is a schematic representation of one embodiment the system ;
- Figure 2 is a representation of an exemplary screen of the system of Figure 1, in a chat show application and
- Figure 3 is a schematic representation of a further embodiment of the system.

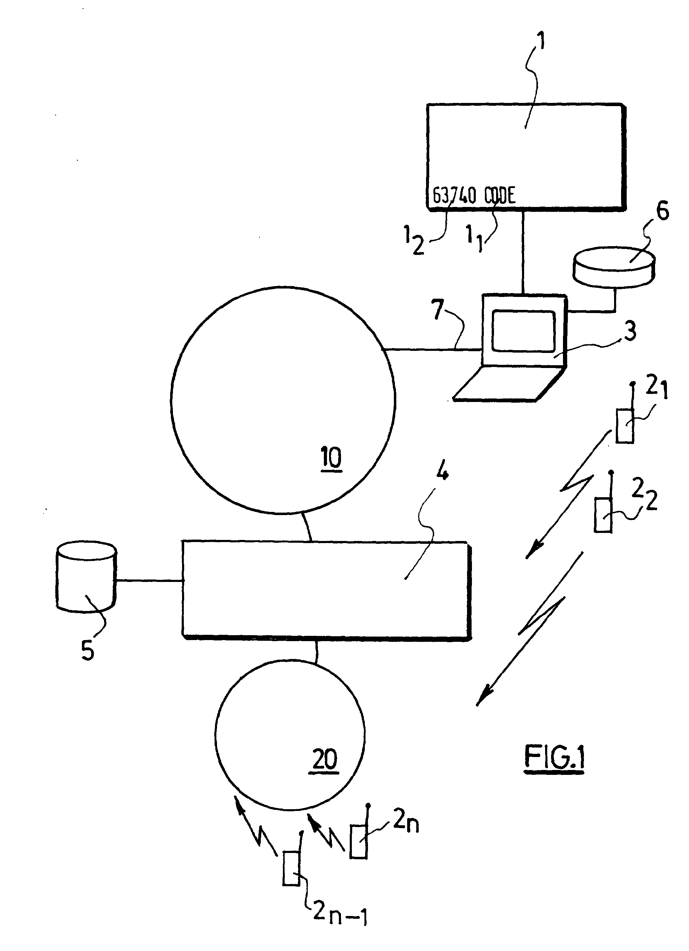

The invention, which will now be described with reference to figure 1, progresses between an instruction and display screen 1 and mobile telephone terminals 2₁, 2₂, 2ₙ₋₁, 2ₙ of a cellular radiotelephony network 20, at least, the screen 1 being within direct sight of the possessors of mobile telephones, subscribers to the network 20 who interact with the screen 1 by using their terminals as remote controls. The screen 1 is linked to a computer network 10, of the Internet type, by a display controlling computer 3.

Communication from the terminals 2 to the screen 1 is carried out via data messages, in this instance, so-called SMS short messages. The data of these messages are received and processed by a processing centre 4 linked to the two networks 10 and 20. The processing centre 4 controls the controlling computer 3. The system just presented makes it possible to implement a multimedia interactive process which is conducted in three steps:
- sending of information to the screen by possessors of mobile telephones,
- processing of the messages of the mobile telephones by the processing centre,
- reacting of the screen to the messages of the mobile telephones.

### 1) Sending of information to the screen by the possessors of the mobile telephones

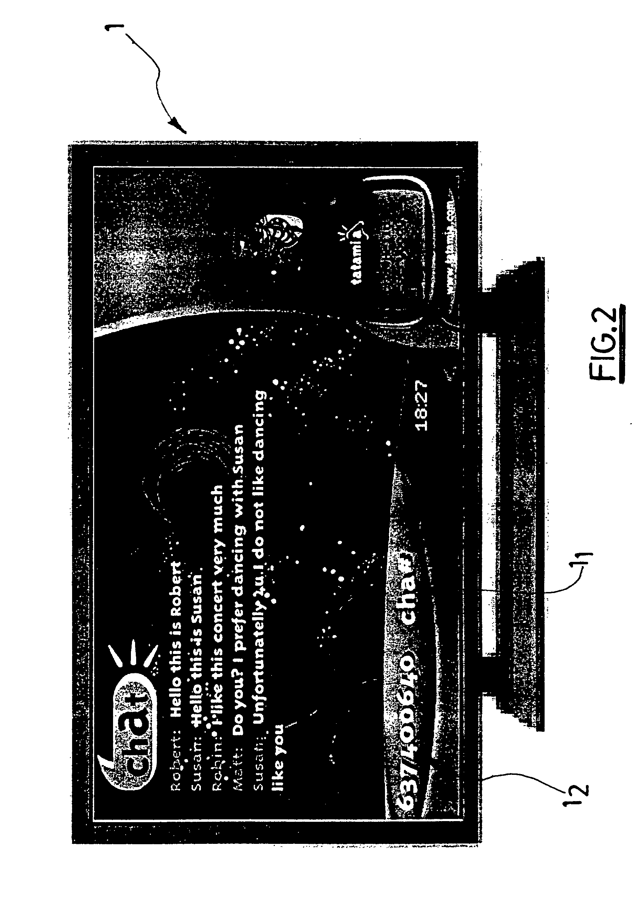

The information is sent here in the form of SMSs which contain
- a code for identifying the relevant screen and the relevant application and which appears on the screen (CODE 1₁) (Figure 2),
- parametrization data required for implementing the application, such as for example
   HELLO, THIS IS ROBERT,
the whole being provided here in an on-line syntactic format, with a separation character between the code 1₁ and the parameter, for example the parameter "sharp"#.

The messages are addressed to the processing centre 4 whose access number 1₂ also appears on the screen (Figure 2).

To proceed with the data of the example considered of a chat show, represented on the screen, the possessor of the terminal by the name of ROBERT, after having read the code 1₁ and the access number 1₂, will write his message.
CODE # HELLO, THIS IS ROBERT
and will send it to the processing centre. In this instance, with reference to the example of Figure 2, the code is cha# and the access number 637400640.

### 2) Processing of the messages of the telephones by the processing centre

The messages of the mobile telephones 2 reach the processing centre 4 through the network 20.

The processing centre 4 is associated with a dynamic database 5 relating to the locations of the screens and to the various applications which are paired up with the identification codes and/or telephone numbers. Thus, the centre extracts from the base 5 the references of the interaction screen 1 and the application of the instant considered. Screen references is understood here to mean the location and the IP address of the computer 3 for controlling the screen 1.

The base 5 can be illustrated by part of the matrix array hereinbelow:

| Tel. number to which the message is sent | Identification code | Application | IP address | Location |
|---|---|---|---|---|
| | | | | |
| NUMBER i | CODE i | Applic. i | 123.1.2.3 | London, Covent Garden |
| | | | | |
| NUMBER j | CODE j | Applic. j | 124.1.2.3 | Paris, City Hall plaza |
| | | | | |
| - --- | CODE k | Applic. k | 134.2.5.6 | Barcelona, plaza Catalunya |
| | | | | |
| NUMBER l | ---- | Applic.l | 140.1.2.3 | New York, Metropolitan TV channel |

In some rows of the table, the dial number is not shown, meaning that the identification code alone is enough to route to the right IP address. In some other rows, the identification code is not shown, meaning that the dial number will always route to the same IP address.

In the case of the chat show, the message
HELLO, THIS IS ROBERT
will have to be addressed to the computer of the application considered, with IP address 123.1.2.3, controlling the screen of ROBERT's correspondent, who is in London.

### 3) Reacting of the screen to the messages of the mobile telephones

Each screen is controlled by a computer which is controlled by the processing centre. It is the computer which implements the application; accordingly, it waits for instructions from the processing centre.

To continue the example of the chat show, the processing centre 4 addresses to the computer 3 the command to display ROBERT's message on the London screen supervised by the computer with address 123.1.2.3.

This is sent through a broadband channel 7 via which the data are exchanged between the processing centre and the computer.

As a variant, one might wish to reserve between the processing centre 4 and each controlling computer 3 only a narrow band channel 7' for transmitting lightweight instructions, such as
- display a particular message,
- start a given movie,
- initiate the relevant application,
a buffer memory 6 then being associated with the computer 3 so as to store common general data, such as files of movies, of spots, etc.

Computer 3 may include a speech generator for an audio interactivity.

Moreover, an applet code can be installed in the computer so as to create a permanent link for interaction between the remote processing centre and the computer.

The new multimedia files are sent to each controlling computer by the processing centre at night or any other low activity period, so as to be run during the day or later according to an FTP protocol.

It is additionally conceivable that, with the system whose structure and manner of operation have just been described, it is also possible to supply certain information services.

A mobile radiotelephony possessor 2, positioned facing a screen 1 offering a particular service, transmits a short message to the processing centre 4 whose access number (1₂) appears on the screen, which is thus constituted:
- identification code of the service (1₁),
- parameter of the service to be received, separated from the code by a character of sharp type.

After incorporating this possessor into the list of subscribers to the service, the possessor receives the requested information on his telephone.

By virtue of the system of the invention, users who are on the move can therefore be offered a customized service.

Naturally, in the examples above employed by the applicant as a basis for defining his invention, that is to say shows and polls, the subscribers 2 are all within direct sight of the same instruction and display screen 1 and the instructions are made to appear and the processed data of the messages are displayed on this same, single screen 1.

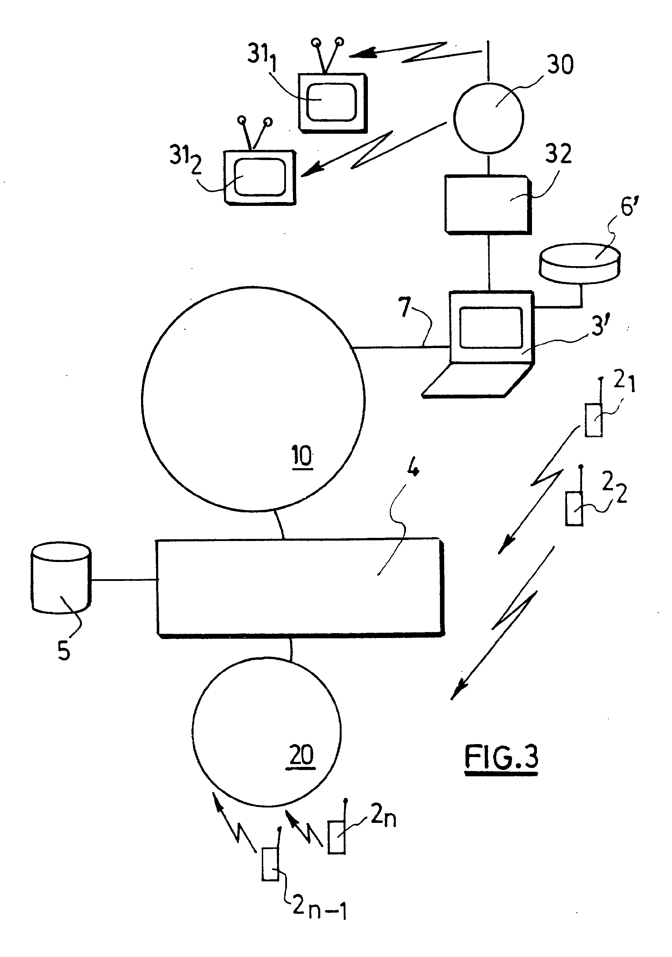

With reference to figure 3, a further embodiment of the system will be described, wherein the subscribers are TV viewers. Instead of being all within direct sight of a single screen, they are in front of their respective TV monitors 31 (31₁, 31₂...) being instruction and display screens, all receiving the same program or the same image broadcasted by a broadcast center 30 of a TV channel 32 controlled by a display controlling computer 3' associated therewith and with a buffer memory 6' and controlled by the processing center 4. The rest of the system is not different from that of figure 1.

Let us take the example of a broadcasted football game, to be seen on the TV monitors 31. The viewers have to vote to select the best player and the result is permanently updated in real time.

The video signal of the controlling computer 3' is mixed with the broadcasted signal of the football game. The viewers, in order to vote, are using their mobile telephone terminals 2 for sending SMS messages and they are able to check on their TV monitors 31 how their votes change the result during the game.

The system is able to introduce interactive games into the programs of TV channels. The games can be played, for instance, in a shopping mall, a concert hall or a village, covered by a local TV broadcast center or even a whole national or international area covered by a national or international TV channel.

## Claims

1. Multimedia interactive process in which
- subscribers (2) to at least one radiotelephony network (20)
- acquire instructions,
- which have been made to appear on at least one instruction and display screen (1; 31) within direct sight of the subscribers (2),
- execute these instructions
- by sending, over the radio network (20), data messages,
- which are caused to be processed (4) so as,
- through a computer network (10),
- to remotely control the displaying on the screen (1; 31) of the processed data of the messages.

2. Process according to Claim 1, in which the subscribers (2) execute the instructions by sending short messages.

3. Process according to one of Claims 1 and 2, in which, before the displaying on the screen (1; 31) of the processed data of the messages, their presentation is controlled (3; 3').

4. Process according to one of Claims 1 to 3, in which the displaying on the screen (1) is performed after determining (5) its location and the IP address of its controlling computer (3).

5. Process according to Claim 4, in which the locations of the screens and their applications are paired up (5) with identification codes.

6. Process according to one of Claims 1 to 3, in which the subscribers (2) are all within direct sight of the same instruction and display screen (1) and the instructions are made to appear and the processed data of the messages are displayed on this same, single screen (1).

7. Process according to one of claims 1 to 3, in which the instructions acquired by the subscribers have been made to appear, through at least the broadcast center (30) of a TV channel (32), on the screens of their respective TV monitors (31) being instruction and display screens.

8. Multimedia interactive system, comprising a processing centre (4), linked to at least one radiotelephony network (20) and to a computer network (10), which is arranged so as to receive data messages from subscribers (2) to the radio network (20) and to process the data, at least one instruction and display screen (1; 31) associated with a display controlling computer (3; 3') linked to the computer network (10) and controlled by the processing centre (4).

9. Multimedia interactive system according to claim 8, wherein said display controlling computer (3') is associated with a broadcast center (30) of a TV channel (32) associated with a series of subscriber's TV monitors (31) of which the screens are instruction and display screens.

10. System according to Claim 8, in which the processing centre (4) is associated with a dynamic database (5) for locating the screens (1) and applications of the system.

11. System according to one of Claims 8 to 10, in which a buffer memory (6; 6') for storing common general data is associated with the display controlling computer (3; 3').

12. Processing centre for multimedia interactive system arranged so as
i) to be linked to a cellular radiotelephony network (20) and to a computer network (10),
ii) to process message data from subscribers (2) of the radiotelephony network (20) and
iii) to control computers (3; 3') for controlling instruction and display screens (1; 31) for interaction with the said subscribers (2).

13. Processing centre for multimedia interactive system arranged so as
i) to be linked to a cellular radiotelephony network (20) and to a computer network (10),
ii) to process message data from subscribers (2) of the radiotelephony network (20) and
iii) to control a computer (3') for controlling a broadcast center (30) of a TV channel (32) associated with the subscriber's TV monitors (31) of which the screens are instruction and display screens for interaction with the said subscribers (2).
